# EUROPEAN PATENT APPLICATION

(11) **EP 4 789 905 A1**
(43) Date of publication of application: **12.08.2026**
(21) Application number: 24874983.0
(22) Date of filing: 04.10.2024
(51) Int. Cl.: B60L 53/20, B60L 53/66, H02J 7/00

(54) **ELECTRIC VEHICLE CHARGING APPARATUS**

(30) Priority: 05.10.2023 KR 20230132604
(71) Applicant: LG Innotek Co., Ltd., Seoul 07796 (KR)
(72) Inventor: SONG, Il Jong, Seoul 07796 (KR)
(74) Representative: DREISS Patentanwälte PartG mbB
(86) International application number: PCT/KR2024/015085
(87) International publication number: WO 2025/075427

(57) **Abstract**

A charging device for an electric vehicle according to one embodiment of the present invention includes a connector receiving a control pilot (CP) signal in the form of pulse wide modulation (PWM), a first voltage detector detecting a first voltage of the CP signal, a second voltage detector detecting a second voltage of the CP signal, and a controller calculating a third voltage which is a difference between the first voltage and the second voltage and determining a charging state of the charging device by using the detected first voltage and the calculated third voltage, wherein the first voltage is a maximum voltage of the CP signal, the second voltage is a difference between the maximum voltage and a minimum voltage of the CP signal, and the third voltage is the minimum voltage of the CP signal.

## Description

### [Technical Field]

The present invention relates to an electric vehicle, and more particularly, to charging of an electric vehicle.

### [Background Art]

Eco-friendly vehicles such as an Electric Vehicle (EV) or a Plug-In Hybrid Electric Vehicle (PHEV) utilize Electric Vehicle Supply Equipment (EVSE) installed at a charging station for battery charging.

For charging of the EV, the EV and the EVSE communicate by a charging connector connected between the EVSE and the EV. When the charging connector is connected between the EVSE and the EV, charging is started after signaling for charging is performed between the EVSE and the EV.

A CP (control pilot) pin exists in the charging connector, and a CP signal in a PWM (Pulse Wide Modulation) form is transmitted from the EVSE to the EV through the CP pin. Interaction between the EVSE and the EV can be monitored and controlled through the CP signal, and a voltage magnitude of the CP signal may vary for each charging state. Accordingly, a charging device of the EV must detect the voltage magnitude of the CP signal. A method is required for the charging device of the EV to accurately and efficiently detect the voltage magnitude of the CP signal.

### [Disclosure]

### [Technical Problem]

The technical problem to be achieved by the present invention is to provide a charging device for charging an electric vehicle (EV).

### [Technical Solution]

A charging device for an electric vehicle according to one embodiment of the present invention includes a connector receiving a control pilot (CP) signal in a form of pulse wide modulation (PWM), a first voltage detector detecting a first voltage of the CP signal, a second voltage detector detecting a second voltage of the CP signal, and a controller calculating a third voltage which is a difference between the first voltage and the second voltage and determining a charging state of the charging device by using the detected first voltage and the calculated third voltage, wherein the first voltage is a maximum voltage of the CP signal, the second voltage is a difference between the maximum voltage and a minimum voltage of the CP signal, and the third voltage is the minimum voltage of the CP signal.

The charging state of the charging device may be one of a charger disconnected state, a charger connected state, a charging state, and an error state.

When the first voltage detected by the first voltage detector is +11V to +13V and the second voltage detected by the second voltage detector is +23V to +25V, it may be determined as the charger disconnected state; when the first voltage detected by the first voltage detector is +8V to +10V and the second voltage detected by the second voltage detector is +20V to +22V, it may be determined as the charger connected state; when the first voltage detected by the first voltage detector is +5V to +7V and the second voltage detected by the second voltage detector is +17V to +19V, or when the first voltage detected by the first voltage detector is +2V to +4V and the second voltage detected by the second voltage detector is +14V to +16V, it may be determined as the charging state; and when the first voltage detected by the first voltage detector is -1V to +1V and the second voltage detected by the second voltage detector is +11V to +13V, or when the first voltage detected by the first voltage detector is -13V to -11V and the second voltage detected by the second voltage detector is -1V to +1V, it may be determined as the error state.

The second voltage detector may include a first capacitor having one end connected to a first node between the connector and the first voltage detector, a first diode having one end connected to the other end of the first capacitor and the other end connected to a ground, a second diode having one end connected to the one end of the first diode, and a second capacitor having one end connected to the other end of the second diode and the other end connected to the ground.

The second voltage detector may further include a resistor connected between the other end of the second diode and the one end of the second capacitor.

The first voltage detector may include a third diode having one end connected to the first node and a third capacitor having one end connected to the other end of the third diode and the other end connected to the ground.

A second node between the second diode and the second capacitor of the second voltage detector and a third node between the third diode and the third capacitor of the first voltage detector may be respectively connected to the controller.

A filter unit disposed between the connector and the first node may be further included.

A control method of a charging device for an electric vehicle according to one embodiment of the present invention includes receiving a control pilot (CP) signal in a form of pulse wide modulation (PWM), detecting a first voltage of the CP signal, detecting a second voltage of the CP signal, calculating a third voltage which is a difference between the first voltage and the second voltage, and determining a charging state of the charging device by using the detected first voltage and the calculated third voltage, wherein the first voltage is a maximum voltage of the CP signal, the second voltage is a difference between the maximum voltage and a minimum voltage of the CP signal, and the third voltage is the minimum voltage of the CP signal.

### [Advantageous Effects]

According to embodiments of the present invention, a voltage magnitude of a CP signal between an EVSE and an EV can be efficiently detected. According to embodiments of the present invention, a circuit for detecting the voltage magnitude of the CP signal in a charging device of the EV can be implemented to have accurate performance while being simple and inexpensive.

### [Description of Drawings]

FIGS. 1 to 2 are views showing a charging system for an electric vehicle according to one embodiment of the present invention.
FIGS. 3 and 4 show electrical equivalent circuits of a CP circuit.
FIG. 5 shows a CP signal in the form of PWM output from EVSE.
FIG. 6 is a block diagram of a charging device for an EV according to one embodiment of the present invention.
FIG. 7 is a flowchart of a control method of a charging device for an EV according to one embodiment of the present invention.
FIG. 8 is a CP signal detection circuit according to one embodiment of the present invention.
FIGS. 9 to 13 are simulation results when various CP signals are input to a circuit according to an embodiment of the present invention.

### [Modes of the Invention]

Hereinafter, exemplary embodiments according to the present invention will be described in detail with reference to the accompanying drawings.

However, the technical spirit of the present invention is not limited to some embodiments to be described, but may be implemented in various different forms, and one or more of the components between the embodiments may be selectively combined and substituted within the technical spirit of the present invention.

Further, terms (including technical and scientific terms) used in the embodiments of the present invention may be interpreted as meanings which may be generally understood by those skilled in the art unless explicitly specifically defined and described, and the meanings of the generally used terms such as terms defined in a dictionary may be understood in consideration of contextual meanings in the related art.

In addition, the terms used in the embodiments of the present invention are provided not to limit the present invention but to describe the embodiments.

In the present specification, a singular form may also include a plural form unless otherwise specified in the phrase, and may include one or more of all possible combinations of A, B, and C when disclosed as at least one (or one or more) of "A, B, and C".

Further, terms such as first, second, A, B, (a), (b), and the like may be used to describe the components of the embodiment of the present invention.

These terms are only provided to distinguish one component from another component, and the essence, sequence, order, or the like of the elements are not limited by these terms.

Further, when a specific component is disclosed as being "connected," "coupled," or "linked" to another component, this may not only include a case of the component being directly connected, coupled, or linked to the other component but also a case of the component being connected, coupled, or linked to the other component by another component between the element and the other component.

In addition, when one component is disclosed as being formed "on or under" another component, the term "on or under" includes both a case in which the two components are in direct contact with each other and a case in which at least another component is disposed between the two components (indirectly). In addition, when the term "on or under" is expressed, a meaning of not only an upward direction but also a downward direction may be included based on one component.

Hereinafter, embodiments will be described in detail with reference to the accompanying drawings, and the same or corresponding components are denoted as the same reference numeral regardless of the reference numerals, and overlapping descriptions thereof will be omitted.

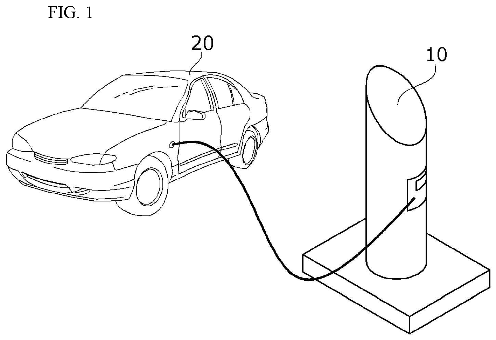

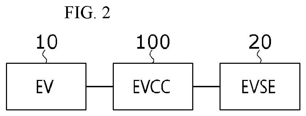

FIGS. 1 to 2 are views showing a charging system for an electric vehicle according to one embodiment of the present invention.

Referring to FIGS. 1 to 2, an electric vehicle (EV) 10 may be charged by electric vehicle supply equipment (EVSE) 20. In the present specification, the EV 10 is a vehicle propelled by an electric motor that withdraws current from a rechargeable storage battery or another portable energy storage device. In the present specification, the description is based on the EV 10, but it is obvious that it is also applied to a plug-in hybrid electric road vehicle (PHEV).

To this end, a charging cable 22 connected to the EVSE 20 may be connected to an inlet of the EV 10. Here, the EVSE 20 is equipment that supplies AC or DC, may be disposed in a charging station or in a home, and may also be implemented to be portable. The EVSE 20 may be used interchangeably with a supply, an AC supply, a DC supply, a socket-outlet, etc.

A charging device (Electric Vehicle Charging Controller, EVCC) 100 is mounted in the EV 10 and connected to the EV 10. For example, the charging device 100 may be installed in a trunk of the EV 10, but is not limited thereto.

Here, the charging device 100 may communicate with each of the EV 10 and the EVSE 20.

Methods for connecting the EV 10 to the EVSE 20 can be divided into four modes and three cases. Mode 1 is connecting the EV 10 to an a.c. supply network using a cable and a plug, connecting to a standard socket-outlet. Mode 2 is connecting the EV 10 to an a.c. supply network using a cable and a plug connected to a standard socket-outlet, and the standard socket-outlet has a CP function and a protection system for preventing electric shock between the EV and the socket-outlet. Mode 3 is connecting the EV 10 using EVSE 20 permanently connected to an a.c. supply network, and the CP function is extended to control devices in the EVSE 20. Mode 4 is connecting the EV 10 to an a.c. or d.c. supply network using a d.c. EVSE or a DC EV charging station by using the CP function. Case A is connecting the EV 10 to an a.c. supply using a cable and plug assembly permanently attached to the EV. Case B is connecting the EV 10 to a supply using a cable assembly detachable at both ends. Case C is connecting the EV 10 to a supply using a supply cable and a vehicle connector permanently attached to an EV charging station.

In a cable assembly between the EV 10 and the EVSE 20, a CP conductor, which is an insulated conductor creating a CP circuit, may be disposed together with a protective conductor (PE). Here, the CP circuit is a circuit designed for signal transmission or communication between the EV 10 and the EVSE 20, and the CP function may be used to monitor and control interactions between the EV 10 and the EVSE 20. A control pilot function (CPF) controller, which is a device managing a CP signal and the CP function, may be disposed in the EVSE 20. A proximity function may be an electrical or mechanical means indicating a state in which a connector is inserted into the inlet of the EV 10 or a state in which a plug of a socket-outlet is inserted into a charging station.

In Mode 2, Mode 3, and Mode 4, the EVSE 20 has functions of continuous continuity checking of a protective earthing conductor, verification of whether the EV 10 is appropriately connected to the EVSE 20, supplying power to the EV 10, stopping power supply to the EV 10, and transmitting maximum current information. Here, in order to supply power to the EV 10, the CP function between the EVSE 20 and the EV 10 must be accurately set to a signal state allowing power supply.

In Mode 2, Mode 3, and Mode 4, the CP function is performed through the CP circuit using pulse wide modulation (PWM).

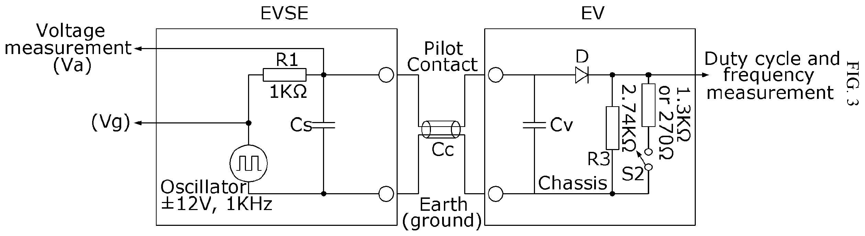

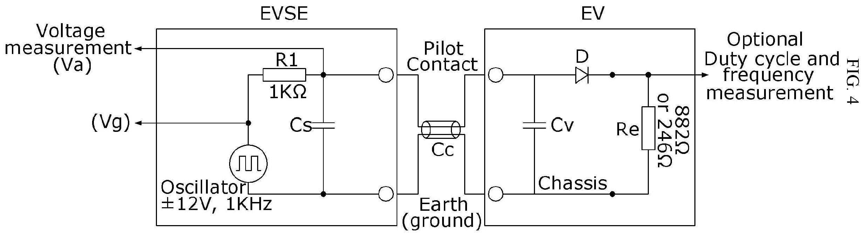

FIGS. 3 and 4 show electrical equivalent circuits of a CP circuit.

Referring to FIGS. 3 and 4, when the EV 10 induces a higher current than the CP function (duty cycle), the EVSE 20 may open a switching device thereof. In this case, the EVSE 20 will follow conditions of an allowed response time of the EV 10, a current tolerance with respect to the duty cycle generated by the EVSE 20, and a tolerance of current measurement in the EVSE 20 itself.

Referring to FIG. 3, the EVSE 20 communicates by setting a duty cycle of a PWM signal or a continuous DC voltage signal. The EVSE 20 may change the duty cycle of the PWM signal. The EV 10 responds by applying a resistive load to a positive halfwave of the CP circuit.

Referring to FIG. 4, the EV 10 using a simplified CP circuit will be limited to singlephase charging and will not exceed a current of 10A. The EVSE 20 may support the EV 10 using a simplified CP circuit. In this case, the EVSE 20 will modulate the PWM signal in the same manner as the method for the EV 10 using the general CP circuit of FIG. 3. The EV 10 using the simplified CP circuit may measure the duty cycle.

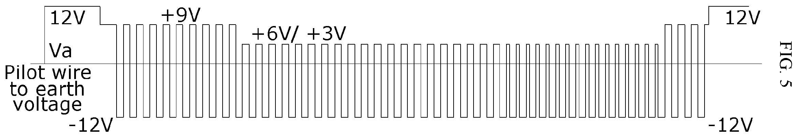

FIG. 5 shows a CP signal in the form of PWM output from the EVSE.

Referring to FIG. 5, the EVSE 20 outputs a CP signal in the form of PWM having a maximum voltage of +12V and a minimum voltage of -12V. The EVCC 100, which is the charging device of the EV 10, detects the CP signal and monitors and controls the state.

The states according to the CP signal may be divided into State A, State B, State C, State D, State E, and State F. State A is a state in which a charger is disconnected between the EVSE 20 and the EV 10, that is, an unplugged state, and when a peak of the CP signal is +12V±1V, the state is determined to be State A. State B may be a state in which a charger is connected between the EVSE 20 and the EV 10, that is, a plugged state, and may be a charging preparation state. When a maximum voltage of the CP signal is +9V±1V and a minimum voltage thereof is -12V±1V, the state is determined to be State B. State C and State D may be a state during charging, that is, a charging state, and in particular, State D may be a ventilation required state during charging. When the maximum voltage of the CP signal is +6V±1V and the minimum voltage thereof is -12V±1V, the state is determined to be State C, and when the maximum voltage of the CP signal is +3V±1V and the minimum voltage thereof is - 12V±1V, the state is determined to be State D. State E and State F may be error states. For example, State E may be a state in which power is not supplied to the EVSE 20, and State F may be a state in which the EVSE 20 is not available. When the maximum voltage of the CP signal is +0V±1V and the minimum voltage thereof is -12V±1V, the state is determined to be State E, and when the maximum voltage of the CP signal is - 12V±1V and the minimum voltage thereof is -12V±1V, the state is determined to be State F.

Interactions between the EVSE 20 and the EV 10 may be monitored and controlled through the CP signal, and as described above, the voltage magnitude of the CP signal may vary for each charging state. Accordingly, the charging device 100 of the EV 10 must detect the voltage magnitude of the CP signal.

In general, the charging device 100 detects each of a positive voltage, which is the maximum voltage of the CP signal, and a negative voltage, which is the minimum voltage, and can determine a state between the EVSE 20 and the EV 10 based on the detected maximum voltage and minimum voltage. According to an embodiment of the present invention, the charging device 100 intends to efficiently monitor the charging state between the EVSE 20 and the EV 10 based on the CP signal.

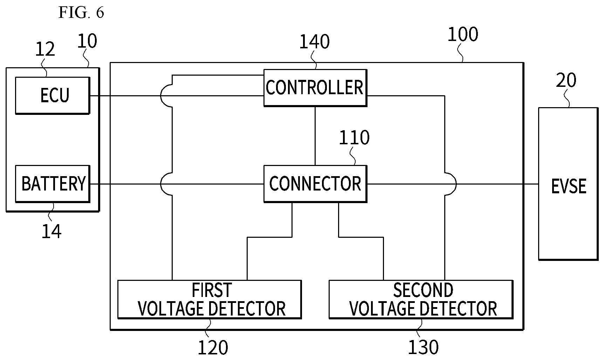

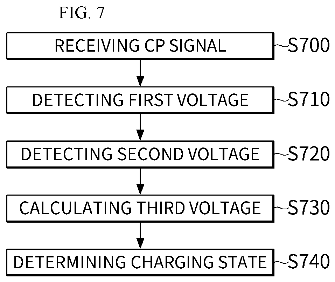

FIG. 6 is a block diagram of a charging device for an EV according to one embodiment of the present invention, and FIG. 7 is a flowchart of a control method of a charging device for an EV according to one embodiment of the present invention.

Referring to FIG. 6, the charging device 100 of the EV 10 may be mounted in the EV 10. The charging device 100 includes a connector 110, a first voltage detector 120, a second voltage detector 130, and a controller 140. Since the embodiment of the present invention relates to a method and device for detecting a CP signal, the description will focus on the detection of the CP signal by the charging device 100 for convenience of description. For other contents except for those related to CP signal detection, known technology regarding the charging device 100 may be applied.

The controller 140 generates a control signal for charging between the EV 10 and the EVSE 20. The control signal for charging generated by the controller 140 may be transmitted to the EVSE 20 through the connector 110 or to an ECU 12 in the EV 10.

The connector 110 is connected to the EVSE 20 and transmits a signal between the controller 140 and the EVSE 20. For example, the connector 110 may transmit a charging-related signal received from the EVSE 20 to the controller 140 and transmit a control signal for charging generated by the controller 140 to the EVSE 20. In addition, the connector 110 transmits power received from the EVSE 20 to a battery 14 in the EV 10 according to the control signal for charging generated by the controller 140.

Referring to FIGS. 6 and 7, the connector 110 receives a control pilot (CP) signal in the form of pulse wide modulation (PWM) from the EVSE 20 (S700). Here, the CP signal is a signal in the form of PWM having a predetermined duty cycle, and may be in the form illustrated in FIG. 5. The CP signal is a signal for monitoring and controlling interactions between the EV 10 and the EVSE 20.

The first voltage detector 120 detects a first voltage of the CP signal (S710), the second voltage detector 130 detects a second voltage of the CP signal (S720), and the controller 140 calculates a third voltage which is a difference between the first voltage and the second voltage (S730).

Here, the first voltage is a maximum voltage of the CP signal in the form of PWM, the second voltage is a difference between the maximum voltage and a minimum voltage of the CP signal in the form of PWM, i.e., an amplitude, and the third voltage may be the minimum voltage of the CP signal in the form of PWM. Here, the maximum voltage is used interchangeably with a positive voltage peak, the minimum voltage is used interchangeably with a negative voltage peak, and the amplitude may be used interchangeably with peak-to-peak.

That is, the first voltage detector 120 detects the maximum voltage of the CP signal, the second voltage detector 130 detects the difference between the maximum voltage and the minimum voltage of the CP signal, i.e., the amplitude, and the controller 140 calculates the minimum voltage of the CP signal, i.e., the negative voltage peak of the CP signal, using the maximum voltage of the CP signal detected by the first voltage detector 120 and the difference between the maximum voltage and the minimum voltage of the CP signal detected by the second voltage detector 130. For example, the controller 140 can calculate the minimum voltage of the CP signal, i.e., the negative voltage peak of the CP signal, by subtracting the difference between the maximum voltage and the minimum voltage of the CP signal detected by the second voltage detector 130 from the maximum voltage of the CP signal detected by the first voltage detector 120. For example, when the positive voltage peak of the CP signal is +9V and the negative voltage peak is -12V, the first voltage detector 120 detects +9V, the second voltage detector 120 detects +21V (=+9V - (-12V)) which is the difference between the positive voltage peak (+9V) and the negative voltage peak (-12V), and the controller 140 can calculate -12V (=+9V - (+21V)), which is the negative voltage peak, using the difference between +9V detected by the first voltage detector 120 and +21V detected by the second voltage detector 130.

According to this, since there is no need to directly detect the negative voltage peak, circuit implementation is easy.

According to an embodiment of the present invention, the controller 140 determines the charging state of the charging device 100 by using the first voltage detected by the first voltage detector 120 and the third voltage calculated by the controller 140 (S740). Here, the charging state of the charging device 100 may be one of a charger disconnected state, a charger connected state, a charging state, and an error state. The charger connected state may mean a state in which the charger is connected but charging is not in progress. The charging state may be determined according to Table 1.

**[Table 1]**

| State | First Voltage | Second Voltage | Third Voltage | Description |
|---|---|---|---|---|
| A state | +11V~+13V | +23V~+25V | -13V~-11V | Charger disconnected |
| B state | +8V~+10V | +20V~+22V | -13V~-11V | Charger connected |
| C state | +5V~+7V | +17V~+19V | -13V~-11V | Charging |
| D state | +2V~+4V | +14V~+16V | -13V~-11V | Charging (ventilation required) |
| E state | -1V~+1V | +11V~+13V | -13V~-11V | Error |
| F state | -13V~-11V | -1V~+1V | -13V~-11V | Error |

That is, when the first voltage detected by the first voltage detector 120 is +11V to +13V and the second voltage detected by the second voltage detector 130 is +23V to +25V, the third voltage is calculated as -13V to -11V by the controller 140, and thus it may be determined as A state, which is the charger disconnected state. And, when the first voltage detected by the first voltage detector 120 is +8V to +10V and the second voltage detected by the second voltage detector 130 is +20V to +22V, the third voltage is calculated as -13V to -11V by the controller 140, and thus it may be determined as B state, which is the charger connected state. In addition, when the first voltage detected by the first voltage detector 120 is +5V to +7V and the second voltage detected by the second voltage detector 130 is +17V to +19V, the third voltage is calculated as -13V to -11V by the controller 140, and thus it may be determined as C state, which is the charging state. In addition, when the first voltage detected by the first voltage detector 120 is +2V to +4V and the second voltage detected by the second voltage detector 130 is +14V to +16V, the third voltage is calculated as -13V to -11V by the controller 140, and thus it may be determined as D state, which is the charging (ventilation required) state. In addition, when the first voltage detected by the first voltage detector 120 is - 1V to +1V and the second voltage detected by the second voltage detector 130 is +11V to +13V, the third voltage is calculated as -13V to -11V by the controller 140, and thus it may be determined as E state, which is the error state. In addition, when the first voltage detected by the first voltage detector 120 is -13V to -11V and the second voltage detected by the second voltage detector 130 is -1V to +1V, the third voltage is calculated as -13V to -11V by the controller 140, and thus it may be determined as F state, which is the error state.

As such, according to an embodiment of the present invention, the charging state of the charging device 100 can be accurately and efficiently detected without directly detecting the negative voltage peak of the CP signal.

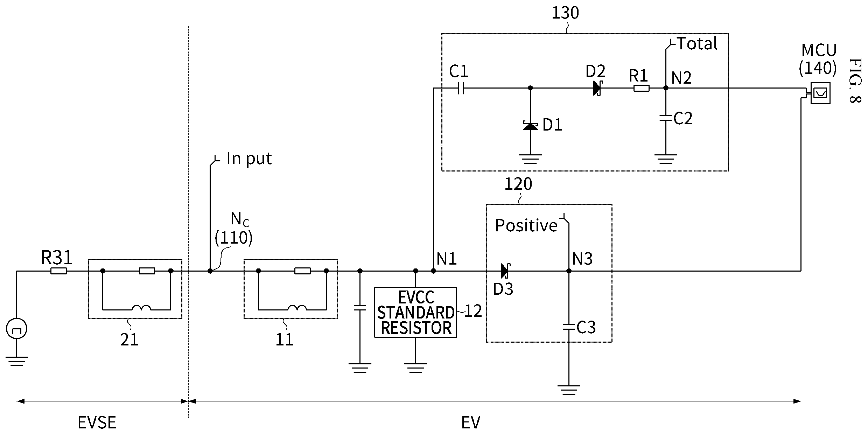

FIG. 8 is a CP signal detection circuit according to one embodiment of the present invention.

Referring to FIG. 8, an EVSE 20 side circuit and an EV 10 side circuit are disposed with a connection node Nc in between. The EVSE 20 side circuit outputs a CP signal in the form of PWM, and the CP signal in the form of PWM is input to the EV 10 side circuit through the connection node Nc. The EVSE 20 side circuit is illustrated as including a resistor R31 and a filter unit 21, and the resistor R31 may be designed to be 1kΩ, but is not limited thereto.

The EV 10 side circuit may include a filter unit 11 and an EVCC standard resistor 12 disposed between the connection node Nc and a first node N1. Here, the filter unit 11 may include at least one of an electrostatic discharge (ESD) filter, a surge filter, an electromagnetic compatibility (EMC) filter, and an electromagnetic interference (EMI) filter. The voltage of the CP signal for each charging state may be sequentially changed by a voltage division of the resistor R31 of the EVSE 20 side circuit and the EVCC standard resistor 12.

In the EV 10 side circuit, the connection node Nc may be included in the connector 110 of FIG. 6. The connector 110, the first voltage detector 120, and the second voltage detector 130 are connected to the first node N1.

According to an embodiment of the present invention, the second voltage detector 130 may include a first capacitor C1, a second capacitor C2, a first diode D1, and a second diode D2. One end of the first capacitor C1 may be connected to the first node N1 between the connector 110 and the first voltage detector 120, and the other end of the first capacitor C1 may be connected to the first diode D1 and the second diode D2. One end of the first diode D1 may be connected to the first capacitor C1, and the other end of the first diode D1 may be connected to the ground. One end of the second diode D2 may be connected to the other end of the first capacitor C1 and the one end of the first diode D1, and the other end of the second diode D2 may be connected to the second capacitor C2. One end of the second capacitor C2 may be connected to the other end of the second diode D2, and the other end of the second capacitor C2 may be connected to the ground. The second voltage detector 130 may further include a resistor R1 connected between the other end of the second diode D2 and the one end of the second capacitor C2. Here, the resistor R1 may be designed as 1kΩ, but is not limited thereto. When the CP signal in the form of PWM is input to the second voltage detector 130, a positive voltage component and a negative voltage component of the CP signal are synthesized, so that the total voltage, i.e., the amplitude of the PWM, can be detected. For example, when a negative voltage component and a positive voltage component are alternately input through the CP signal in the form of PWM, the negative voltage component is charged as a positive voltage component through the first capacitor C1 and the first diode D1 of the second voltage detector 130, and then synthesized with the input positive voltage component through the first capacitor C1, the first diode D1, and the second diode D2, and the total voltage can be detected due to a smoothing effect of the second capacitor C2. For example, when -12V and +12V are alternately input to the second voltage detector 130, -12V is charged to +12V by the first capacitor C1 and the first diode D1, then synthesized with the subsequently input +12V, and a voltage of +24V can be continuously detected due to the smoothing effect of the second capacitor C2. To this end, the first diode D1 and the second diode D2 may be disposed in opposite directions. For example, of both ends of the first diode D1, the one end connected between the first capacitor C1 and the second diode D2 is a cathode, and the other end connected to the ground is an anode; of both ends of the second diode D2, the one end connected to the first capacitor C1 and the first diode D1 is an anode, and the other end connected to the second capacitor C2 is a cathode. And, a capacitance of the first capacitor C1 may be greater than a capacitance of the second capacitor C2. Here, the first diode D1 and the second diode D2 may be Schottky barrier diodes. According to this, fast switching characteristics can be obtained.

According to an embodiment of the present invention, the first voltage detector 120 may include a third capacitor C3 and a third diode D3. One end of the third diode D3 may be connected to the first node N1, and the other end of the third diode D3 may be connected to one end of the third capacitor C3. The other end of the third capacitor C3 may be connected to the ground. When the CP signal in the form of PWM is input to the first voltage detector 120, the third diode D3 and the third capacitor C3 function as a smoothing circuit to detect the positive voltage component of the CP signal. For example, if the peak voltage of the CP signal in the form of PWM is +12V, a continuous voltage of +12V can be detected due to the smoothing effect of the third capacitor C3. Here, the third diode D3 may be a Schottky barrier diode. According to this, fast switching characteristics can be obtained.

At this time, a second node N2 between the second diode D2 and the second capacitor C2 of the second voltage detector 130 and a third node N3 between the third diode D3 and the third capacitor C3 of the first voltage detector 120 may be respectively connected to an MCU included in the controller 140. Accordingly, the first voltage detected by the first voltage detector 120 and the second voltage detected by the second voltage detector 130 are respectively input to the controller 140, the third voltage is calculated by the controller 140, and the charging state of the charging device 100 can be detected.

As such, according to an embodiment of the present invention, the charging device 100 can calculate the negative voltage component of the CP signal without implementing a circuit for directly detecting the negative voltage component of the CP signal. According to this, the circuit complexity is significantly lowered. In particular, according to an embodiment of the present invention, since both the first voltage detector 120 and the second voltage detector 130 do not include an active element, low-cost implementation is possible, and since the circuit complexity is lowered, a defect rate can be lowered, and space utilization can be improved as an area of a PCB for implementing the circuit can be reduced.

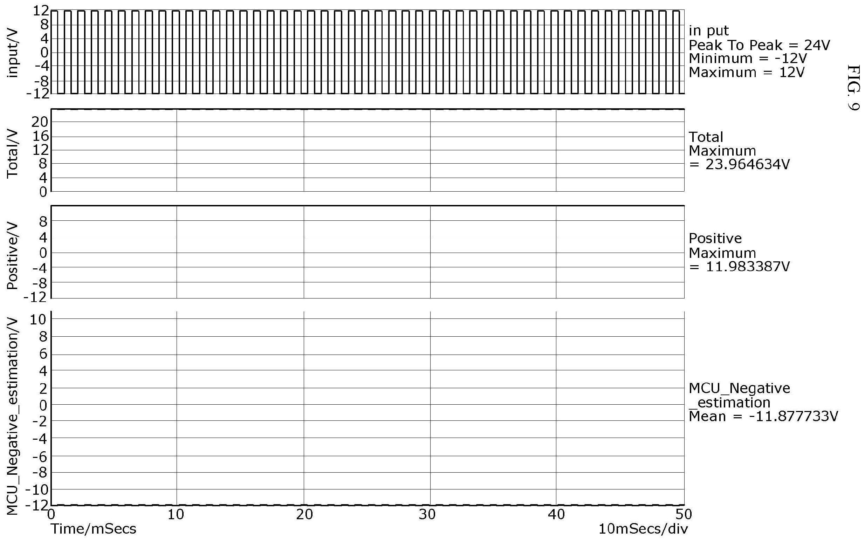

FIGS. 9 to 13 are simulation results when various CP signals are input to a circuit according to an embodiment of the present invention.

Referring to FIG. 9, when a PWM signal having a maximum voltage of +12V and a minimum voltage of -12V is input, it can be seen that a voltage of about 24V is detected by the second voltage detector 130, a voltage of about 12V is detected by the first voltage detector 120, and a negative voltage component of about -12V is calculated by the MCU.

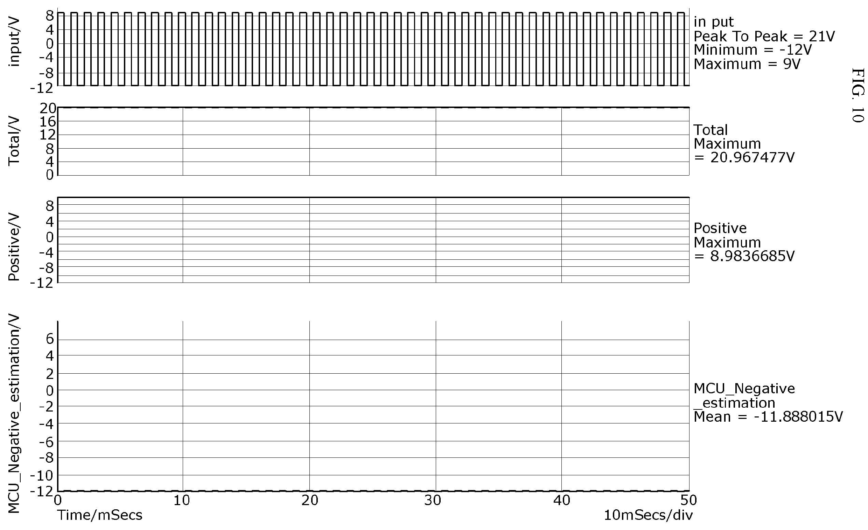

Referring to FIG. 10, when a PWM signal having a maximum voltage of +9V and a minimum voltage of -12V is input, it can be seen that a voltage of about 21V is detected by the second voltage detector 130, a voltage of about 9V is detected by the first voltage detector 120, and a negative voltage component of about -12V is calculated by the MCU.

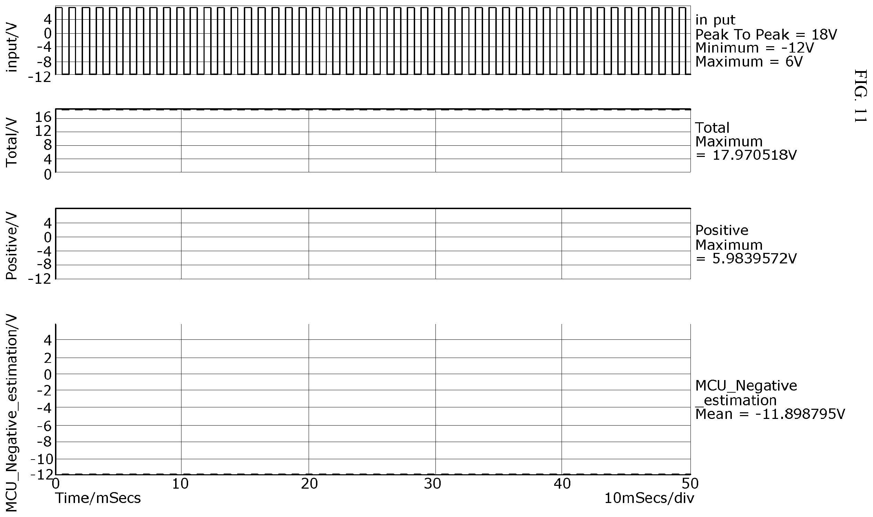

Referring to FIG. 11, when a PWM signal having a maximum voltage of +6V and a minimum voltage of -12V is input, it can be seen that a voltage of about 18V is detected by the second voltage detector 130, a voltage of about 6V is detected by the first voltage detector 120, and a negative voltage component of about -12V is calculated by the MCU.

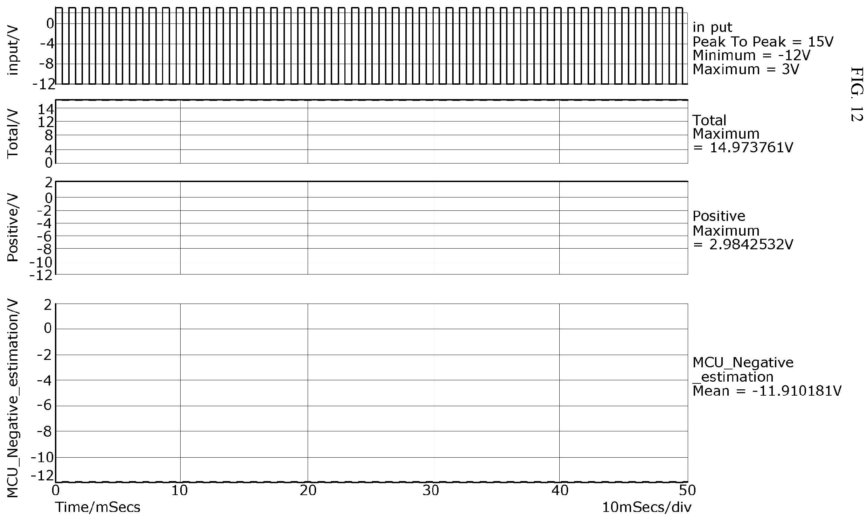

Referring to FIG. 12, when a PWM signal having a maximum voltage of +3V and a minimum voltage of -12V is input, it can be seen that a voltage of about 15V is detected by the second voltage detector 130, a voltage of about 3V is detected by the first voltage detector 120, and a negative voltage component of about -12V is calculated by the MCU.

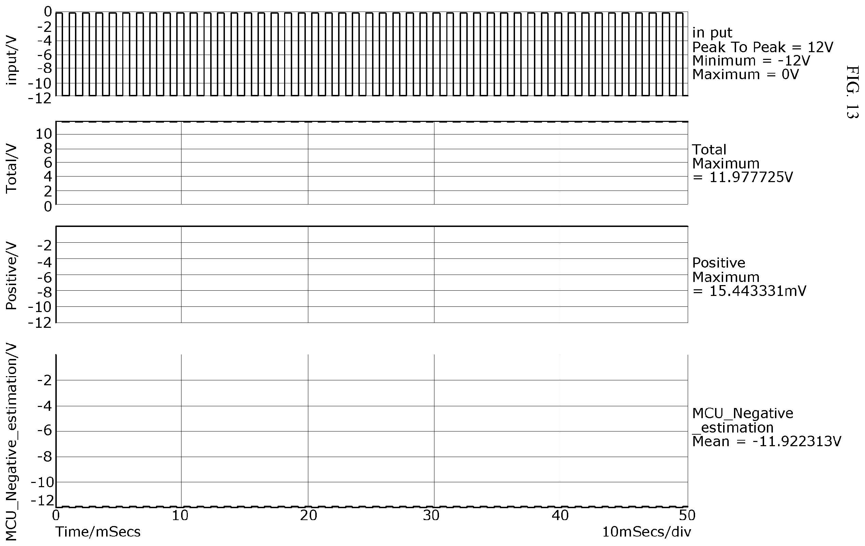

Referring to FIG. 13, when a PWM signal having a maximum voltage of +0V and a minimum voltage of -12V is input, it can be seen that a voltage of about 12V is detected by the second voltage detector 130, a voltage of about 0V is detected by the first voltage detector 120, and a negative voltage component of about -12V is calculated by the MCU.

As such, according to an embodiment of the present invention, the negative voltage of the CP signal can be calculated using a low-cost, low-complexity circuit, and accordingly, it can be seen that detecting the charging state of the charging device 100 is easy.

Although the present invention has been described above with reference to exemplary embodiments, those skilled in the art will understand that the present invention may be modified and changed variously without departing from the spirit and scope of the present invention as described in the appended claims.

### [Description of Symbols]

10: electric vehicle
20: electric vehicle supply equipment
22: charging cable
100: charging device
110: connector
120: first voltage detector
130: second voltage detector
140: controller

## Claims

1. A charging device for an electric vehicle comprising:
a connector configured to receive a control pilot (CP) signal in a form of pulse wide modulation (PWM);
a first voltage detector configured to detect a first voltage of the CP signal;
a second voltage detector configured to detect a second voltage of the CP signal; and
a controller configured to calculate a third voltage which is a difference between the first voltage and the second voltage and determine a charging state of the charging device by using the detected first voltage and the calculated third voltage,
wherein the first voltage is a maximum voltage of the CP signal, the second voltage is a difference between the maximum voltage and a minimum voltage of the CP signal, and the third voltage is the minimum voltage of the CP signal.

2. The charging device of claim 1, wherein the charging state of the charging device is one of a charger disconnected state, a charger connected state, a charging state, and an error state.

3. The charging device of claim 1, wherein:
when the first voltage detected by the first voltage detector is +11V to +13V and the second voltage detected by the second voltage detector is +23V to +25V, it is determined as the charger disconnected state;
when the first voltage detected by the first voltage detector is +8V to +10V and the second voltage detected by the second voltage detector is +20V to +22V, it is determined as the charger connected state;
when the first voltage detected by the first voltage detector is +5V to +7V and the second voltage detected by the second voltage detector is +17V to +19V, or when the first voltage detected by the first voltage detector is +2V to +4V and the second voltage detected by the second voltage detector is +14V to +16V, it is determined as the charging state; and
when the first voltage detected by the first voltage detector is -1V to +1V and the second voltage detected by the second voltage detector is +11V to +13V, or when the first voltage detected by the first voltage detector is -13V to -11V and the second voltage detected by the second voltage detector is -1V to +1V, it is determined as the error state.

4. The charging device of claim 1, wherein the second voltage detector includes a first capacitor having one end connected to a first node between the connector and the first voltage detector, a first diode having one end connected to the other end of the first capacitor and the other end connected to a ground, a second diode having one end connected to the one end of the first diode, and a second capacitor having one end connected to the other end of the second diode and the other end connected to the ground.

5. The charging device of claim 4, wherein the second voltage detector further includes a resistor connected between the other end of the second diode and the one end of the second capacitor.

6. The charging device of claim 4, wherein the first voltage detector includes a third diode having one end connected to the first node and a third capacitor having one end connected to the other end of the third diode and the other end connected to the ground.

7. The charging device of claim 6, wherein a second node between the second diode and the second capacitor of the second voltage detector and a third node between the third diode and the third capacitor of the first voltage detector are respectively connected to the controller.

8. The charging device of claim 1, further comprising a filter unit disposed between the connector and the first node.

9. A control method of a charging device for an electric vehicle, comprising:
receiving a control pilot (CP) signal in a form of pulse wide modulation (PWM);
detecting a first voltage of the CP signal;
detecting a second voltage of the CP signal;
calculating a third voltage which is a difference between the first voltage and the second voltage; and
determining a charging state of the charging device by using the detected first voltage and the calculated third voltage,
wherein the first voltage is a maximum voltage of the CP signal, the second voltage is a difference between the maximum voltage and a minimum voltage of the CP signal, and the third voltage is the minimum voltage of the CP signal.

10. The control method of claim 9, wherein the charging state of the charging device is one of a charger disconnected state, a charger connected state, a charging state, and an error state.
